Europäisches Patentamt

European Patent Office

Office européen des brevets

(19)

(11) **EP 0 507 101 B1**

(12) # EUROPEAN PATENT SPECIFICATION

(45) Date of publication and mention
of the grant of the patent:
**02.06.1999 Bulletin 1999/22**

(51) Int Cl.6: **G01F 15/07**, G01F 15/00,
G01F 15/075, G08B 17/117,
F17D 5/00, G01F 15/02

(21) Application number: **92103830.3**

(22) Date of filing: **06.03.1992**

(54) **Flow amount measuring and controlling apparatus**

Gerät zum Messen und Regeln des Durchflusses

Appareil de mesure et de contrôle du débit

(84) Designated Contracting States:
**DE FR GB IT**

(30) Priority: **04.04.1991 JP 71564/91**
**06.08.1991 JP 196453/91**
**21.10.1991 JP 272302/91**

(43) Date of publication of application:
**07.10.1992 Bulletin 1992/41**

(73) Proprietor: **MATSUSHITA ELECTRIC INDUSTRIAL
CO., LTD.**
**Kadoma-shi, Osaka-fu, 571 (JP)**

(72) Inventors:
• **Horiike, Yoshio**
**Katano-shi, Osaka-fu (JP)**
• **Atsumi, Toru**
**Gojo-shi, Nara-ken (JP)**
• **Marakami, Hirokuni**
**Nara-shi, Nara-ken (JP)**
• **Uno, Takashi**
**Nara-shi, Nara-ken (JP)**

(74) Representative: **Eisenführ, Speiser & Partner
Martinistrasse 24
28195 Bremen (DE)**

(56) References cited:
EP-A- 0 011 787      EP-A- 0 264 856
EP-A- 0 385 501      WO-A-88/08518
GB-A- 1 182 786      GB-A- 2 176 643

## Description

The present invention generally relates to a flow amount measuring and controlling apparatus to be included in a gas meter. The flow amount of gas is observed so as to estimate from the flow amount change what type of gas appliance is being used, so that the gas is shut off when the gas appliance has been judged to be used in an abnormal way.

In order to prevent gas explosion accidents, gas meters are recently utilized, which have microcomputers built in, and have a function of shutting off the gas flow when gas appliances are judged to be abnormally used and from the changes in gas flow amount it is judged that raw gas is released. Such conventional gas meters with a safety function attached to it detect changes in flow amount of gas passing through the gas meter, so as to recognize whether a gas appliance of a capacity equivalent to the size in change has been ignited or put out. The gas supply is adapted to be shut off when the above described gas appliance has been continuously used beyond a maximum time which is previously set in accordance with the capacity of the recognized gas appliance.

But such conventional gas meters with a safety function attached to it have a problem as shown hereinafter. Recent gas appliances have not only two changes of ignition/extinction, but also continuous changes of flow amount during use in accordance with the situation, for example, when a gas fan heater is used to raise the ambient temperature, the combustion amount of the gas fan heater gradually becomes lower as the ambient temperature rises. When the gas flow amount of a first gas appliance has been reduced during the use, the conventional gas meter with a safety function attached to it recognizes the flow amount changes as the extinction of the above described first gas appliance and the ignition of second gas appliance of smaller capacity. When the gas flow amount of the above described first gas appliance has been increased during the use, a third gas appliance equivalent in capacity to the flow amount increase is recognized to have been ignited. As a result, in spite of the fact that a first gas appliance is actually burning large gas flow amounts, the gas meter recognizes that two gas appliances, the second and third gas appliances of smaller capacity, are being used. The maximum time for continuous use of the first gas appliance is extended, with problems that the dangers in gas appliance, forgetting to turn off and raw gas releasing, cannot be prevented. A gas hot water feeding apparatus with larger combustion capacity to be set outdoors is used for various applications such as in a bath, shower, dish washing in a kitchen, and so on. It is often used continuously more than one hour. In such a appliance to be set outdoors, the maximum time of continuous use may be desired to be set especially longer, differently from indoor appliance. This kind of use can be settled without problems if the type of the gas appliance in use at the present time can be recognized correctly.

The power demand is nowadays increased at summer time by the spread of air conditioners using electric power, this results in insufficient power supply capacity. On the other hand, the gas demand is likely to be reduced at summer time. Therefore, there is a tendency of easing the power demand by the use of air conditioners using gas, and at the same time, of averaging the demand of the gas annually. Thus, a rate policy which makes the gas rate lower in accordance with the gas amount used for air conditioners is considered. In order to effect such a rate policy for each appliance, an auxiliary gas meter for measuring the flow amount of gas air-conditioners is necessary in addition to a main gas meter. Expenditures for an auxiliary gas meter and for installing an auxiliary gas meter onto the gas piping are required. If the types of gas appliances now in use with the main gas meter can be correctly recognized and the used gas amount can be correctly integrated, a rate policy for each appliance can be realized only by the main gas meter.

From EP-A-264 856 an apparatus is known, in which the amount of gas consumption, individual maximum flow rate and continuous consumption time of a consumer are measured in a predetermined time period, and a normal reference gas consumption pattern is decided based on the measurement values. Thereafter, a signal outputted from a consumption state detection means is compared with the normal reference gas consumption pattern, and when an abnormal state is detected, a shutoff means is automatically operated by control of a micro-computer.

From GB-A-2 176 643 an apparatus is known, in which the continuous consumption time of a gas appliance in use is measured, and when the measured time value exceeds a continuous service safety time previously memorized, an emergency shut-off valve is operated to cut off the gas supply.

Accordingly, the present invention has been developed with a view to substantially eliminating the above discussed drawbacks inherent in the prior art, and a particular object of the present invention is to provide a flow amount measuring apparatus which can recognize which gas appliance now is used by the monitoring operation of the flow amount passing through a gas meter, and can integrate the used flow amount for each appliance.

This object is being solved by an apparatus as defined in claim 1. Preferred embodiments are defined in the dependent claims.

Particularly, there is provided a flow amount measuring apparatus which has information stored in advance such as rising flow amount information at the ignition time of various gas appliances, information of the using flow amount capacity of the various types of gas appliances, information as to whether or not the appliance in use changes the flow amount during the operation, besides in the time of ignition/ extinction, information about change of the using flow amount with respect to the time passing from the ignition of the various types of gas appliances, and so on. When the amount of the gas flow passing through the gas meter changes, comparisons are effected among the respective types of information, actually measured gas flow amount values, changes in the gas flow amount, and time periods required to change. From above information, the gas appliance now ignited/extinguished or increased the flow amount is possibly assumed. And by using the maximum possibility of gas appliance which made gas flow change, the appliance recognition capacity is increased remarkably as compared with the conventional one.

In the present invention, as the above described, respective types of information stored in advance is automatically learned by changes in the gas flow amount passing through the gas meter, all the respective types of information is not required to be input by an operator. Therefore, the bother at the gas meter installation time can be saved.

A gas meter, with a safety function attached to it, which is capable of evading the dangerous condition such as gas appliance not to turn off, raw gas releasing and so on by the use of the present invention can be realized.

The present invention can realize a rate policy for each appliance simply with one gas meter.

| | |
|---|---|
| Fig. 1 | is a system block diagram of a flow amount measuring apparatus showing one embodiment of the present invention; |
| Fig. 2, Fig. 3 and Fig. 4 | are block diagrams of pulse interval correcting means which are elements constituting a flow amount measuring apparatus of the present invention; |
| Fig. 5 | is a block diagram of flow amount change detecting means which are the other elements constituting a flow amount measuring apparatus of the present invention; |
| Fig. 6 | is a flow amount change diagram for illustrating the operation of the above described flow amount change detecting means; |
| Fig. 7 | is a flow chart for illustrating the above described flow amount change detecting means; |
| Fig. 8 | is a block diagram of an individual flow amount estimating means; |
| Fig. 9 | is a flow chart showing the operation of the above described individual flow amount estimating means; and |
| Fig. 10 | is a block diagram of an appliance characteristic registering means which are the other elements constituting a flow amount measuring apparatus of the present invention. |

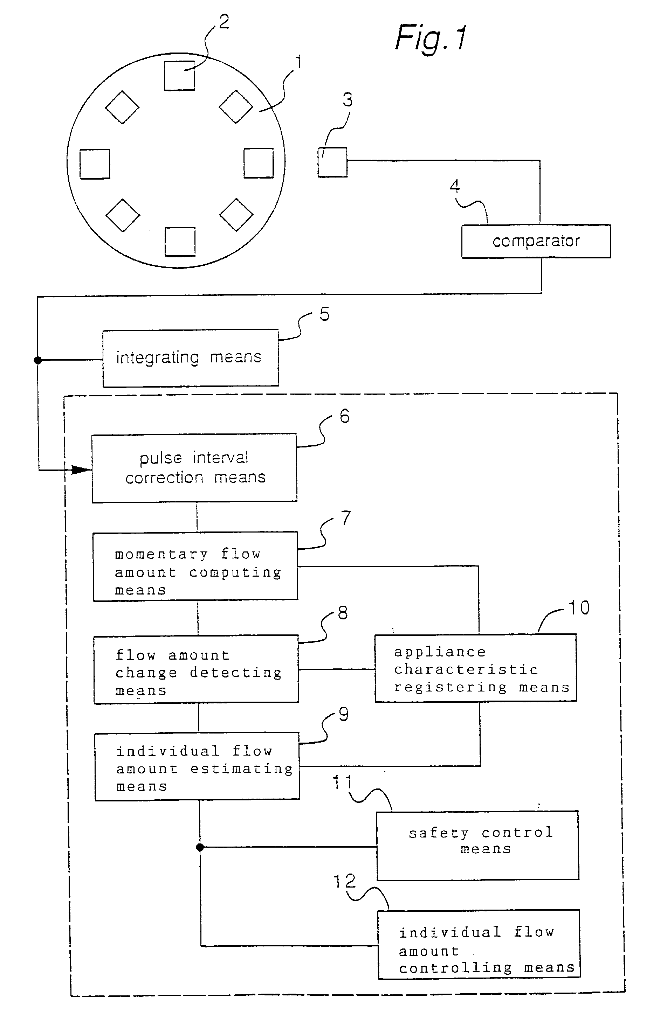

Fig. 1 is a system block diagram of a flow amount measuring apparatus showing one embodiment of the present invention. In the drawing, reference numeral 1 is a disc for effecting one rotation through an interlocking operation with one round trip of the film of a film type gas meter, reference numeral 2 is a plurality of magnets (which are assumed to be eight in the present embodiment) disposed on the disc 1, reference numeral 3 is a magnetic resistance element fixedly secured near the disc 1 so as to detect the change in the magnetic field, reference numeral 4 is a comparator for converting the outputs of the magnetic resistance element 3 into pulses, reference numeral 5 is an integrating means for counting the pulses from the comparator 4 so as to effect an integrating operation.

Reference numeral 6 is a pulse interval correcting means for correcting the pulse intervals of the pulse signals from the comparator 4. Reference numeral 7 is a momentary flow amount computing means for calculating the flow amount per unit time from the pulse signal and the time width of the pulse signal from the pulse interval correcting means 6. Reference numeral 8 is a flow amount change detecting means so as to detect the size of the flow amount change and the continuous time of the flow amount change by the information from the momentary flow amount computing means 7. Reference numeral 9 is an individual flow amount estimating means which estimates the gas flow of an appliance which has a gas flow change, by comparing the information from the flow amount change detecting means 8 with characteristic informations of each gas appliance in use that stored in the individual flow amount estimating means 9 itself, and with the gas flow amount information of the gas appliance in use and the household retain which is registered in the appliance characteristic registering means 10. Appliance characteristic registering means 10 detects a condition where momentary flow amount does not exist, namely, a condition where no gas appliance is used, and recognizes the ignition of the gas appliance and the maximum rising flow amount at the ignition time by the information from the flow amount change detecting means 8, and then register the maximum ignition flow amount of the ignited gas appliance. Reference numeral 11 is a safety control means, which memorizes the maximum time for which each gas appliances can be operated continuously and safely. By the flow amount information of the using gas appliance from the individual estimating means 9, the safety control means 11 judges a case where a certain gas appliance is continuously used beyond the above maximum time is an abnormal use such as the gas appliance not being turned off or the like so as to shut off the gas. There is an integrating means for each appliance, which integrates and displays the used flow amount for each gas appliance by the information from the individual flow amount estimating means 9. The flow amount integrating means for each appliance has a communication means with the outside so as to transmit to the outside the integrating values for each appliance. Reference numeral 12 is a flow amount measuring and controlling apparatus of the present invention.

Although one embodiment of the present invention has been described in outlook, it will be described hereinafter in detail for each block diagram for constituting the present invention.

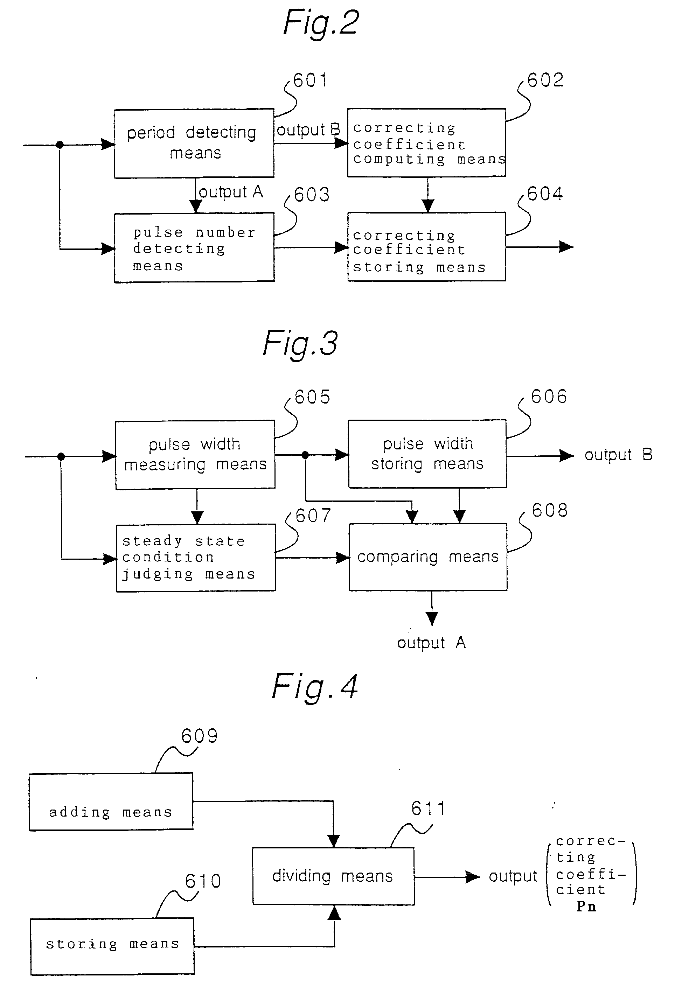

A film type gas meter is adapted to convert the reciprocating motion in a linear direction of the film by the gas pressure into the rotating motion of the disc. As its characteristic, even if a gas flow is constant, the disc 1 does not rotate at a constant angular speed. Therefore, the pulse output from the comparator 4 does not become the pulse output of the equal interval even if magnets 2 are disposed at equal intervals on the disc 1. If the momentary flow amount is calculated under the pulse output, the correct momentary flow amount and the error are caused. The pulse interval correcting means 6 is to correct inequality of the above described pulse interval to be caused by the characteristic of the film type gas meter. A block diagram of the pulse interval correcting means 6 is shown for explanation in Fig. 2. The pulse signals from the comparator 4 are input to a period detecting means 601 and to a pulse number detecting means 603. Eight pulses are caused respectively for one rotation of the disc 1. Reference pulses are identified from each series of eight pulses which are input in the periodic detecting means 601 so as to transmit the reference pulse information to the pulse number detecting means 603. The pulse which has maximum pulse width of, for example, eight pulses is detected as the reference pulse. In the correcting coefficient computing means 602, eight signals of one period of series are taken in from the period detecting means 601 so as to measure the respective eight pulse widths for determining the correcting coefficients. The eight correcting coefficients for each eight pulses are transmitted to correcting coefficient storing means. One embodiment of the construction of the period detecting means 601 is shown in Fig. 3. In the same drawing, reference numeral 605 is a pulse width measuring means, reference numeral 606 is a pulse width storing means, reference numeral 607 is a steady state condition judging means and reference numeral 608 is a comparing means. The pulse signals from the comparator 4 is measured in the pulse time width by the pulse width measuring means 605. The pulse time width of eight pulses for one rotation of the disc 1 is stored in the pulse width storing means 606. In the steady state condition judging means 607, the meter judges whether the gas is flowing constantly or not. When the gas is flowing constantly, the comparing means 608 is operated. In the judgment whether or not the gas is flowing constantly, for example, one signal is output for each divided eight pulses, and if the periods of the above signals are constant, it can be judged that the gas is flowed constantly. Also, in the other method, it can be judged that gas flows constantly if the pulse widths on every eight pulse are equal. In the comparing means 608, the eight pulse widths stored in the pulse width storing means 606 are compared with in size so as to take out the maximum pulse width for comparing the pulse width existing at the present time point to be input from the pulse width measuring means 605 with the above described maximum pulse width. If two pulse widths are equal, the pulse input at the present time point is regarded as a reference pulse. When the reference pulse is input, the output A is caused from the comparing means 608 so that the count value of the pulse number detecting means 603 of Fig. 2 becomes 0. Eight pulse width information of one period of pulses stored in the pulse width storing means 606 is output in the order from the reference pulse with respect to the correcting coefficient computing means 602 of Fig. 2.

One embodiment of the construction for the correcting coefficient computing means 602 will be described with reference to Fig. 4. A correcting coefficient computing method will be described hereinafter.

Assume that the correcting coefficients and pulse widths of the eight pulses are respectively $P_n$, $T_n$ ($n = 0$ through 7), counting from the reference pulses. $T_n$ is input from the period detecting means 601, and eight pulse widths from T0 to T7 are added by the adding means 609. On the other hand, the input eight pulse width data are stored in the storing means 610. The division between eight pulse widths $T_n$ respectively stored in the storing means 610 and the addition data of the adding means 609 are effected by the dividing means 611 so as to output a correcting coefficient $P_n$.

A correcting coefficient $P_n$ in a formula is as follows.

$$P_n = T_n \times 8 / (T0 + T1 + T2 + T3 + T4 + T5 + T6 + T7)$$

The correcting coefficient $P_n$ obtained by the above described formula is outputted to the correction coefficient storing means 604 of Fig. 2. Whether the set values of the reference pulse and the correction coefficient (not shown in Fig. 1 and Fig. 2) are output to the pulse number detecting means 603 and the correcting coefficient storing means 604 is adapted to be controlled from the outside so as to output the set value if necessary, for example, at the initial setting time when the gas meter starts to be used, it is effected with respect to the pulse number detecting means 603 and the correction coefficient storing means 604. In Fig. 2, the pulse number detecting means 603 is composed of a counter circuit for counting the eight pulses. The above described counter circuit is cleared by the signals from the period detecting means 601. Accordingly, the count value of the pulse number detecting means 603 is 0 at a data time point when the reference pulse has been input. Whenever a pulse is input, the count value is added one by one. The count value restores to 0 when the pulses is input to the next of 7. Namely, whenever the pulse is input, the count value changes as follows.

$$0 \rightarrow 1 \rightarrow 2 \rightarrow 3 \rightarrow 4 \rightarrow 5 \rightarrow 6 \rightarrow 7 \rightarrow 0 \rightarrow 1 \rightarrow 2 \rightarrow ......$$

Accordingly, the reference pulse is a pulse of 0 number. The number of the pulse counted from the reference pulse can be known from the pulse to be input at the present time by a pulse number detecting means 603. Whenever the pulse is input from the comparator 4, the pulse number detecting means 603 outputs the pulse number of the input pulse to the next stage of correcting coefficient storing means 604. The correcting coefficient storing means 604 outputs the correcting coefficient corresponding to the pulse number whenever the pulse number information is input.

In the above described construction, the flow amount measuring apparatus functions automatically to correct the inequality of the pulse signal interval from the comparator 4 which is caused by the characteristics of the film type gas meter, so that correct and highly resolved integration display and.a correct momentary flow amount measuring operation can be realized, with an effect improving safety processing function.

Although the period detecting means 601 is described in the embodiments of Fig. 2 and Fig. 3 so that it may be operated only at the initial setting time, it may be adapted to operate, reset regularly, for example, once per day.

In the present embodiment, although the pulse number detecting means 603 outputs the corresponding pulse number each time the pulse inputs, at a time point when the pulse has been input after the lapse of one second after the former pulse number has been output, the collectively input pulse numbers can be output so that the correcting processing operation may be effected in each approximately one second.

Operation of the momentary flow amount computing means 7 in Fig. 1 will be described hereinafter. One second after from inputting the pulse 0 signal from the pulse interval correcting means 6, the time and the pulse number between pulse 0 and pulse N are measured hereinafter. Momentary flow amount Q is obtained by $Q = N/T$, here, N is the pulse number and T is the time between pulse 0 and pulse N. The momentary flow amount Q is equal to 0 when pulses are not input for ten seconds, for example.

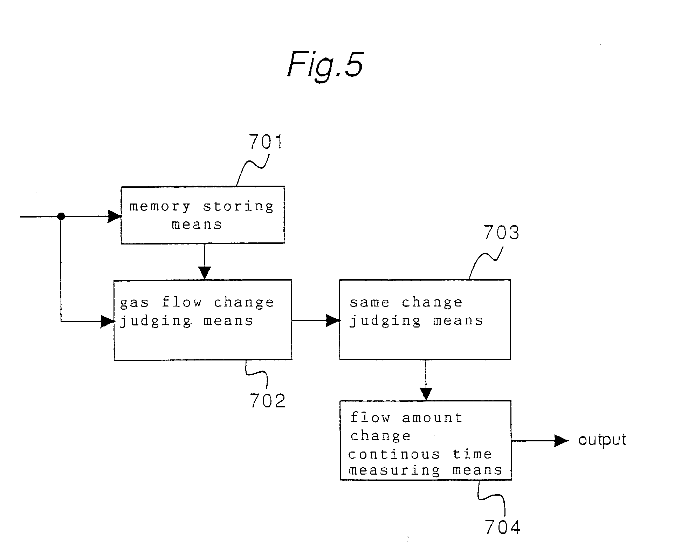

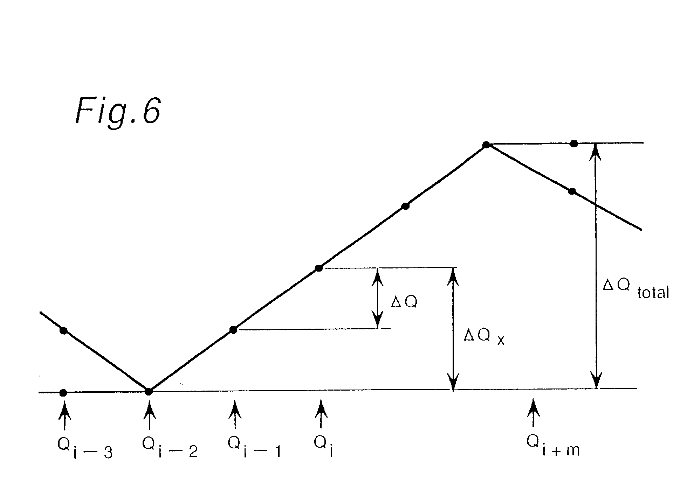

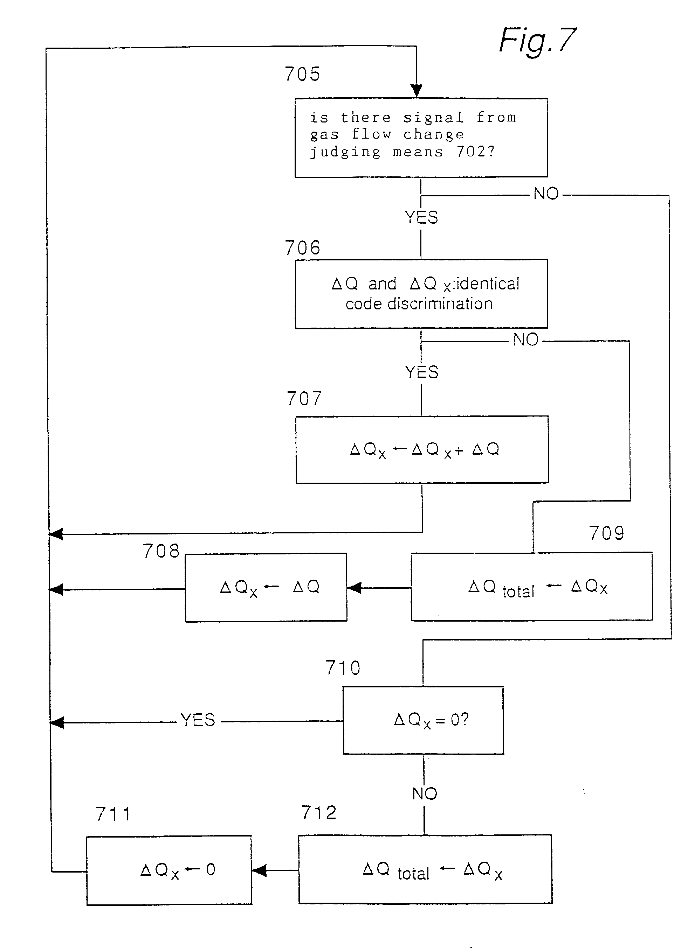

The operation of the flow amount change detecting means 8 in Fig. 1 will be described hereinafter. Fig. 5 is a block diagram showing the construction of a flow amount change detecting means 8. Generally the flow amount change at the ignition time of the gas appliance and the flow amount change at extinction time are changed momentarily. The gas hot water feeding machine controls the gas combustion amount electronically so that the hot water temperature to be output may be made constant at a set temperature. In such a case, the flow amount changes slowly for a long period of time. The flow amount change detecting means 8 detects the pattern of this change so as to detect the length of the continuous change of one gas appliance. In Fig. 5, reference numeral 701 is a storing means for sequentially storing the memory of the flow amount from the momentary flow amount computing means 7, reference numeral 702 is a gas flow change judging means which judges whether the gas flow amount change | Qi-Qi-1 | is more than a previously fixed threshold value, for example, 0,03 XQi, here Qi is a present momentary flow amount and Qi-1 is last value of it. Same change judging means 703, judges whether the past flow amount change and the present flow amount change are a series of change of the same gas appliance or the change in the other gas appliance, from the judging result by the above described flow change judging means 702. A conception chart of the same change judging method in the same change judging means 703 is shown in Fig. 6, a flow chart for illustrating the concrete operation of the same change judging means 703 is shown in Fig. 7. The operation of the same change judging means 703 will be described hereinafter. In Fig. 6, Qi is a present momentary flow amount, Qi-1 is a momentary flow amount one before of it. Qi-2, Qi-3 are respectively momentary flow amount two, three, before Qi + m is a momentary flow amount value m after from Qi, $\Delta Q = Q_i - Q_{i-i}$, $\Delta Q_x$ are present integration values of the same flow amount change, $\Delta Q_{total}$ is an overall integration value in the same flow amount change.

In the example of Fig. 6, the momentary flow amount value two before and momentary flow amount three before do not change or the flow amount reduces. The flow amount increases from the momentary flow amount value two before to the momentary flow amount value m after from Qi. At the time of m number and its subsequent, the flow amount change is not provided or the flow amount change turns round into decreasing change. In the same change judging means 703, as shown in Fig. 6, the change flow amount $\Delta Q_{total}$ at a time point when the flow amount has been changed from a condition where the flow amount changes are not effected, or a time point when the flow amount has not been changed from Qi-2 at a time point when the reverse flow amount change has been effected, or to Qi + m at a time point the flow amount has been turned round into inverse flow amount changes are judged as one flow amount change. The $\Delta Q_{total}$ is output as an output C into the next stage of individual flow amount estimating means 9.

The detailed operation of the above described same change judging means 703 will be described hereinafter in accordance with the flow chart of Fig. 7. At a step 705, it is judged whether the flow amount change signal $\Delta Q$ exists from the flow change judging means 702. If the flow amount change signal $\Delta Q$ exists, it is judged whether, in the step 705, $\Delta Q$ and $\Delta Qx$ which is integrated value of the same flow amount change, are the same code (the same code in a case of $\Delta Q > 0$ and $\Delta Qx > 0$, or $\Delta Q < 0$ and $\Delta Qx < 0$). If $\Delta Q$ and $\Delta Qx$ are the same codes or $\Delta Qx$ is zero, $\Delta Q$ is added to $\Delta Qx$ as the same change in the step 707. If the $\Delta Q$ and $\Delta Qx$ are not the same codes, the reverse changes are caused. After the $\Delta Q_{total}$ has been replaced by the $\Delta Qx$ in the step 709, the $\Delta Q$ is replaced by $\Delta Q$ as a new change in the step 708. If it is judged that the flow amount change signal $\Delta Q$ does not exist from the flow change judging means 702 in the step 705, consectively it is judged whether or not $\Delta Qx$ is zero in the step 710. $\Delta Qx$ is zero means the flow amount change has not been effected up to the last time. As the flow amount change does not exist this time, the step returns to the step 705 for the next flow amount change judgment without doing anything. If there is no signal from flow change judging means 702 and $\Delta Qx$ is not zero at the step 710, it means last series of change was completed, and the $\Delta Qx$ is substituted by zero at the step 711 after the $\Delta Q_{total}$ has been replaced by the $\Delta Qx$ in the step 12. In the step 709 and the step 712, the signal of the $\Delta Q_{total}$ is adapted to be output as the output C.

The operation of the flow amount change continuing time measuring means 704 will be described hereinafter. As described hereinabove, when the gas hot water feeding apparatus changes the momentary gas flow amount by the electronic control, the flow amount change is often slow. When the gas appliances such as a gas fan heater or the like are extinguished or ignited, the change of falling or rising gas flow amount is steep. In order to find out the gas appliance correctly which made gas flow amount change using the characteristics of gas flow amount change, the time the flow amount change has been continued is measured. When the start of the flow amount change is detected in the same change judging means 703, a signal informing the start of the flow amount change is transmitted to the flow amount change continuing time measuring means 704. When it is confirmed that the flow amount change has been completed from the same change judging means 703, a signal informing the flow amount change completion is transmitted to the flow amount change continuing time measuring means 704. The time from the start to the completion of the flow amount change is measured as $\Delta T$ so as to output as the output D to the next stage of individual flow amount estimating means 9.

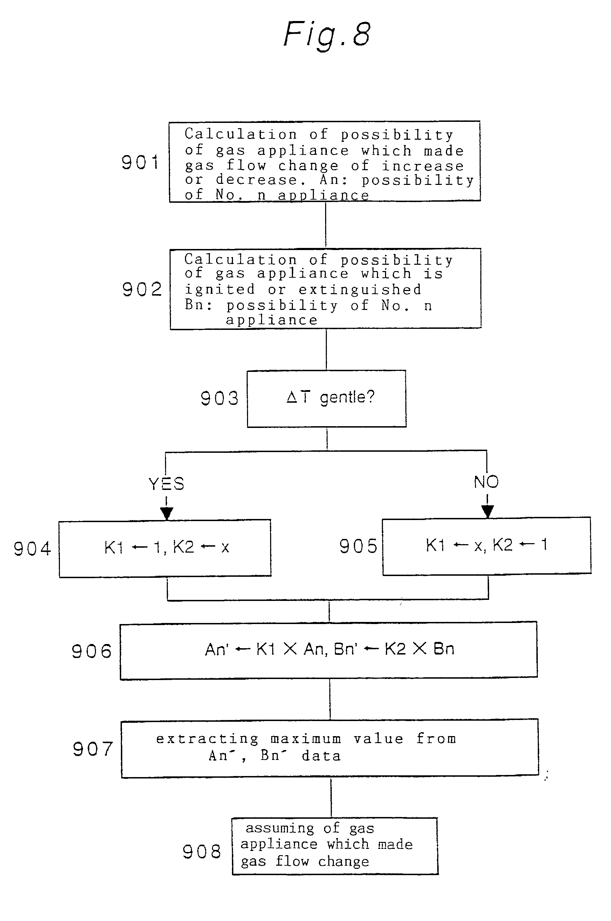

The operation of the individual flow amount estimating means 9 will be described hereinafter. With the use of two informations of the size $\Delta Q_{total}$ from the flow amount change detecting means 8 and the flow amount change continuing time $\Delta T$, the gas appliance which the flow amount changes come from is estimated. The flow chart for illustrating the operation of the individual flow amount estimating means 9 is shown in Fig. 8. The possibility of which gas appliance made gas flow change of $\Delta Q_{total}$ is computed in the step 901, 902. In the step 901, the possibility of gas appliance which increased or decreased gas flow amount is computed and registered to An. Here an additional character n is a register number, which shows an identification number of a gas appliance. In the step 902, the possibility of the ignition or the extinction of the gas appliance is computed, and the result is registered to Bn. In the step 903, it is judged whether the flow amount change is gentle or steep with the use of the flow amount change continuing time $\Delta T$. If the change is gentle, in the step 904, coefficients K1 = 1, K2 = x (previously determined constant of x < 1). If the change is steep in the step 903, coefficients K1 = x, K2 = 1 are established in the step 905. In the step 906, the possibility of flow amount change of the respective gas appliances computed in the step 901 and step 902 are corrected by the coefficients K1, K2. Namely, the possibility An is multiplied by the coefficient K1 and registered to An'. The possibility Bn is multiplied by the coefficient K2 and registered to Bn'. When the flow amount change is gentle by the operation, the possibility of the ignition or the extinction of the gas appliance becomes smaller at value, and the possibility of such flow amount increase or decrease as of the hot water feeding machine and so on which have electronic control becomes larger in value. In the step 907, the largest value in the register An'and Bn' is selected. In the step 908, the gas appliance number n which made the gas flow amount change is possibly assumed. Accordingly, in the case of the example shown in Fig. 6, the possibility of the gentle flow amount change by the proportional control hot water feeding device is calculated to be larger than the possibility of flow amount change by the gas fan heater extinction. As a result, it is estimated that the gas flow amount of the hot water feeding device is decreased.

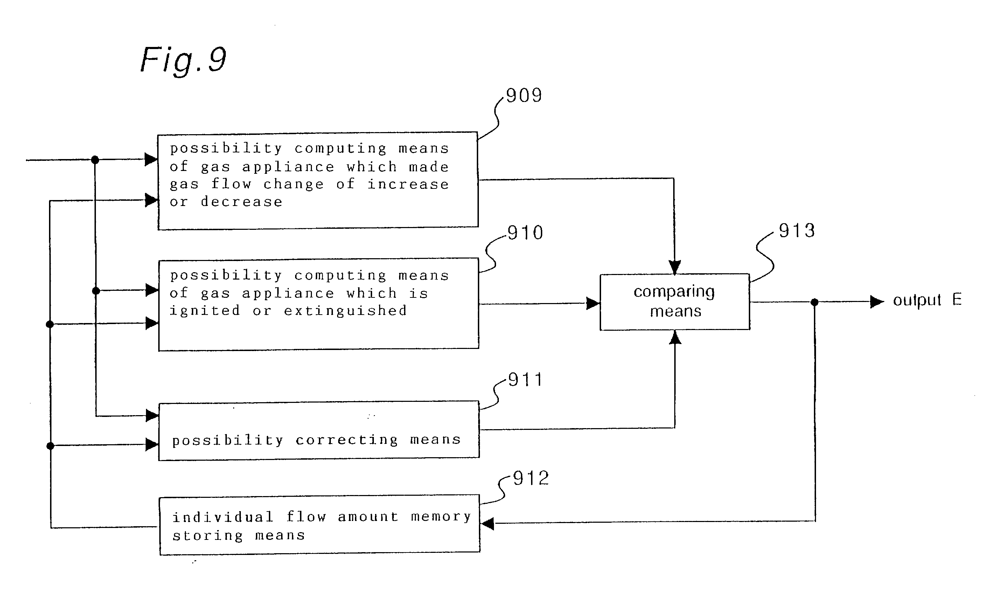

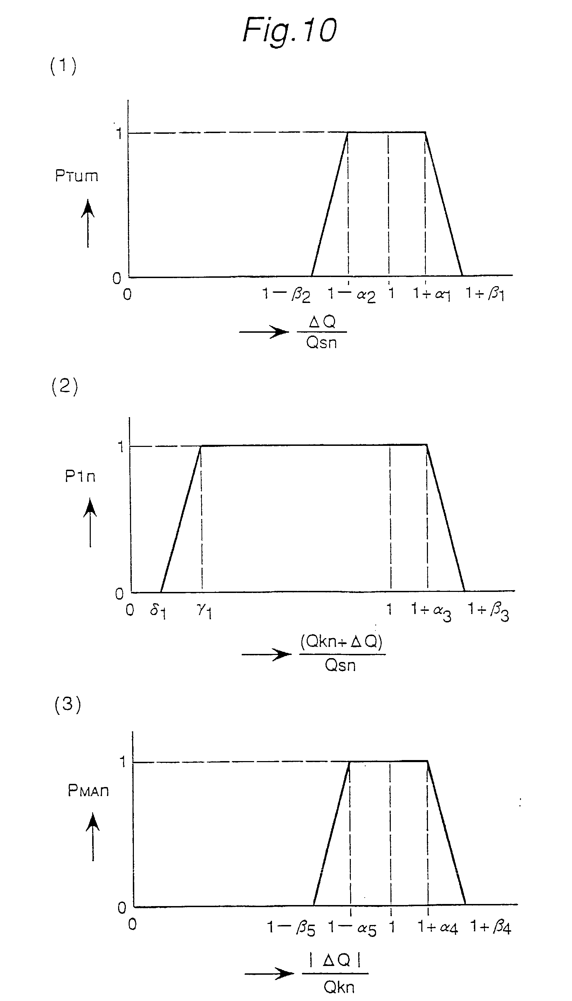

Fig. 9 shows a block diagram showing the construction of the individual flow amount estimating means 9. Reference numeral 909 is a possibility computing means of gas appliance which made gas flow change of increase or decrease during the use, reference numeral 910 is a possibility computing means of the ignition of the gas appliance unused and the extinction of the gas appliance during the use, reference numeral 911 is a possibility correcting means, reference numeral 912 is an individual flow amount memory storing means for each gas appliances in use, reference numeral 913 is a comparing means which compares the possibility of the gas appliance which made gas flow change from above mentioned data. In the various types of possibility computing means of the reference numerals 909, 910, 911, the possibilities of the flow amount change are computed for each of gas appliances with the use of size of the change flow amount from the flow amount change detecting means 8 of the former stage, the continuous time of the change flow amount, the rising characteristics of the appliance characteristic from the appliance characteristic registering means 10, and the flow amount value to be used at the present time for each of the gas appliances from the individual flow amount storing means 912. For the computing method of the possibility, such functions as shown in Fig. 10 is used. In (1) and (2) of Fig. 10, Qsn is a gas flow amount at an ignition time of a appliance number n registered in the appliance characteristic registering means 10, Okn is a flow amount in stable use of gas appliance which stored in the individual flow amount storing means 912, $\Delta Q$ is a change flow amount from the flow amount change detecting means 8. The function in Fig. 10 can be set under the adjustable gas flow amount value range of the gas appliance. In (1) of Fig. 10, Ptum is a function for obtaining the possibility of the ignition, P1n in (2) is a function for obtaining the possibility of the flow amount change of the gas appliance during the use, Pman in the (3) is a function for obtaining the possibility of extinction of the appliance in use. The value of the possibility obtained from each function of Fig. 10 is corrected by the way described in the flow chart of Fig. 8 using the information from the flow amount change detecting means 8, as flow amount change is steeple or gentle. The flow amount value is considered to change by the pressure variation and so on of the gas piping even if the change is not in the gas appliance. The possibility correcting means 911 can compute the possibility of the flow amount change except in the gas appliance. The comparing means 913, outputs the information of the gas appliance number n and its flow amount which possibly made largest gas flow change, as the output E. In the individual flow amount memory storing means 912, a change flow amount $\Delta Q$ is added to the individual flow amount value of the gas appliance estimated by the comparing means 913 and is stored as the new individual flow value.

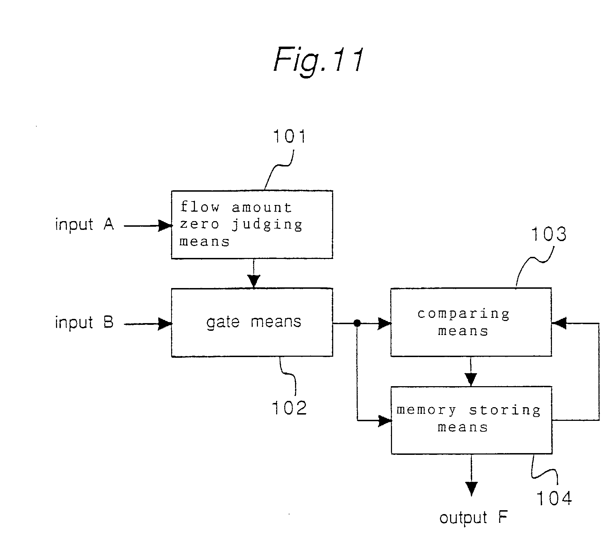

The construction about the appliance characteristic registering means 10 will be described hereinafter with reference to Fig. 11. In Fig. 11, reference numeral 101 is a flow amount zero judging means, reference numeral 102 is a gate means, reference numeral 103 is a comparing means, numeral reference 104 is a memory storing means. Signals from the momentary flow amount computing means 7 are input as input A. Signals from the flow amount change detecting means 8 are input as input B. The flow amount zero judging means 101 judges whether the flow amount is zero or not, namely, a gas appliance is not used or used. The flow amount zero judging means 101 is composed so that the output is caused if the gas appliance is not used. Assume that the gas fan heater of 3000 kcal/h is used in a condition where no other gas appliance is used. The output of the momentary flow amount computing means 7 is changed to 3000 kcal/h from zero and a signal equivalent to 3000 kcal/h is output to the flow amount change detecting means 8. The flow amount zero judging means 101 outputs a si.gnal as first the gas appliance is not used. When a gas fan heater is used, it is switched to no signal. The switching time to no signal is delayed as compared with the output signal from the flow amount change detecting means 8. The gate means 102 transmits the signal of the flow amount change detecting means 8 to the comparing means 103 only when the flow amount zero judging means 101 is outputting a signal. As the switching the signal from the flow amount zero judging means 101 to no signal is delayed in time as compared with the output of the flow amount change detecting means 8, the output of the flow amount change detecting means 8 is input to the comparing means 103 through the gate means 102. In the comparing means 103, signals stored in the memory storing means 104 is compared with signal corresponding to 3000 kcal/h from the flow amount change detecting means 8. Unless the signal corresponding to 3000 kcal/h has been stored in the storing means 104, the output from the comparing means 103 is caused so as to store the signal corresponding to the 3000 kcal/h in the storing means 104. Then, assume that the gas fan heater of the 3000 kcal/h is used in a condition where the hot water feeding device is being used. In this case, the flow amount zero judging means 101 outputs no signal from the beginning. Therefore, the gate means 102 does not convey to the comparing means 103 the signal of the flow amount change detecting means 8. Therefore, the comparing means 103 and the memory storing means 104 do not operate. In the above described construction, the appliance characteristic registering means 10 registers the gas flow amount correspond to gas appliance automatically through the comparing means 103 and the memory storing means 104 only when a certain gas appliance is used from a condition where no other gas appliance is being used, with an effect that the bother of the registration of the new gas appliance is saved.

According to the present invention, a gas appliance can be determined which made the flow amount change by the information such as the gas flow amount rising characteristics and the gas flow amount adjusting range or the like from the individual flow amount estimating means 9. By correct estimation of the used gas flow amount of the gas appliance, abnormal use of gas can be judged correctly by the safety control means 11 and gas explosions and fire can be prevented. Also, the rate policy for each appliance can be effected by the integration of the used gas flow amount for each gas appliance by the integrating means 12 for each gas appliance.

The flow amount measuring and controlling apparatus of the present invention can be realized easily with the use of the microcomputers.

## Claims

1. A flow amount measuring and controlling apparatus comprising a momentary flow amount computing means (7) for computing the flow amount per unit time of fluid, a flow amount change detecting means (8) for detecting and outputting the flow amount change and the time from the start of the flow amount change to the completion thereof by the time change characteristics of the momentary flow amount value, an appliance characteristic registering means (10) for storing the flow characteristics of a number of appliances connected to said flow amount measuring and controlling apparatus, an estimating means (9) for determining which of the appliances has caused a particular change in the flow amount by use of flow amount change information from the flow amount change detecting means (8) and the flow characteristics of the appliances stored in the registering means (10), and an individual flow amount controlling means (12) for controlling the used flow amount of each appliance separately by the signal from the individual flow amount estimating means (9).

2. A flow amount measuring and controlling means as defined in claim 1, wherein the individual flow amount controlling means (12) has a function of cutting off the supply of the fluid when a certain appliance has been used beyond a predetermined maximum time continuously usable, and said maximum time is set for each appliance separately.

3. A flow amount measuring and controlling means as defined in claim 1, wherein the individual flow amount controlling means (12) has a display means provided to display the integrating value of the used flow amount of at least previously determined specific appliance.

4. A flow amount measuring and controlling means as defined in claim 1, wherein the individual flow amount controlling means (12) has a communication means provided to transmit outsides through a telephone circuit and so on the used flow amount information of at least previously determined specific appliance.

5. A flow amount measuring and controlling means as defined in claim 1, wherein the flow amount change detecting means (8) comprises a memory storing means (701) for storing the signals from the momentary flow amount computing means (7), and the same change judging means (703) for detecting, outputting the starting time point and the completion time point of the flow amount change with the use of the past momentary flow amount change stored in the memory storing means (701) and the present momentary flow amount from the momentary flow amount computing means (7) with the input signal from the momentary flow amount computing means (7) and the signal from the memory storing means (701).

6. A flow amount measuring and controlling means as defined in claim 5, wherein the same change judging means (703) is adapted to judge that the change is the same up to a time when the difference between the last momentary flow amount stored in the storing means (701) and the present momentary flow amount value is determined to be not greater than a predetermined value during certain predetermined times.

7. A flow amount measuring and controlling means as defined in claim 5, wherein the same change judging means (703) is adapted to judge that the change is the same up to a time when the difference between the last momentary flow amount stored in the storing means (701) and the present momentary flow amount value is determined to be not greater than a predetermined value during certain predetermined times, or up to a time when the difference between the last momentary flow amount stored in the storing means (701) and the present momentary flow amount value is detected as a certain value or more and the inclination of the flow amount change becomes to be reverse.

8. A flow amount measuring and controlling means as defined in claim 1, wherein the flow amount change detecting means (8) comprises a memory storing means (701) for storing the signals from the momentary flow amount computing means (7), the same change judging means (703) for detecting and outputting the starting time point and the completion time point of the flow amount change by comparing the information of the past momentary flow amount change stored in the memory storing means (701) and the present momentary flow amount value from the momentary flow amount computing means (7), and a flow amount change continuous time measuring means (704) for measuring a continuous time period of same series of flow amount change detected by the same change judging means (703).

9. A flow amount measuring and controlling means as defined in claim 1, wherein the appliance characteristic registering means (10) comprises a flow amount zero judging means (101) for judging whether the flow amount is zero by the input signal from the flow amount change detecting means (8), a gate means (102) for deciding whether or not the signals from the flow amount change detecting means (8) are to be transmitted to the next stage by the control of flow amount zero judging means (101), a memory storing means (104) connected with the gate means (102) to store the flow amount value at ignition time of the appliance, and a comparing means (103) for outputting the signal to control the memory storing means (104) so that the signal from the gate means (102) may be stored in the memory storing means (104) if the signal from the gate means (102) is not in agreement with the signal from the memory storing means (104) through the comparison between the signals.

10. A flow amount measuring and controlling means as defined in claim 1, wherein the individual flow amount estimating means (9) comprises an individual flow amount storing means (912) for storing the flow amount value of each appliance in use at the present time, a possibility computing means (909, 910, 911) for computing the possibility of the appliance which made flow amount change by a predetermined function with the use of the information of the change flow amount and the continuous time information of the flow amount change from the flow amount change detecting means (8), and the information of the flow amount at ignition time stored in the appliance characteristic registering means (10), and the information of the flow amount during the use of each appliance stored in the individual flow amount storing means (912), and a comparing means (913) which compares the possibilities of each appliance computed by the possibility computing means (909, 910, 911) and judges the appliance having maximum possibility as it made flow amount change.

11. A flow amount measuring and controlling means as defined in claim 10, wherein the possibility computing means (909, 910, 911) comprises a computing means (909) for computing the possibility of the flow amount increase/decrease of the appliance in use, a computing means (910) for computing the possibility of the ignition of the appliance not in use and of the extinction of the appliance in use, and a computing means (911) for computing the necessity to correct the flow amount value of each appliance during the use.

12. A flow amount measuring and controlling means as defined in claim 1, comprising a flow amount detecting means (3, 4) adapted to output a plurality of signals for one rotation or one round trip of mechanical type movable portion which correspond to certain constant volume of fluid flow, and a pulse interval correcting means (6) for correcting the pulse interval so that the pulse signal comes out every same flow amount during one rotation or one round trip of the mechanical type movable portion, where the momentary flow amount value counted by the momentary flow amount computing means (7) is corrected.

13. A flow amount measuring and controlling apparatus as defined in claim 12, wherein the pulse interval correcting means (6) comprises a period detecting means (601) for detecting the reference signal of the period of one rotation or one round trip of the mechanical type movable portion, a pulse number detecting means (603) for counting the pulse number from the reference signal detected by the period detecting means (601) to count the number of the output signals of the flow amount detecting means (3, 4), a correcting coefficient storing means (604) for storing the correction coefficient for correcting the flow amount value corresponding to the signal from the flow amount detecting means (3, 4) so as to output the correction coefficient stored in accordance with the signal from the pulse number detecting means (603), a correction coefficient computing means (602) for computing the correction coefficients by the signal from the period detecting means (601) so as to output it to the correction coefficient storing means (604).

14. A flow amount measuring and controlling apparatus as defined in claim 13, wherein the period detecting means (601) comprises pulse width measuring means (605) for measuring the pulse width from the signal of the flow amount detecting means (3, 4), a pulse width storing means (606) for storing the pulse width measured by the pulse width measuring means (605), a comparing means (608) for comparing the size of the pulse width with the pulse width information from the pulse width measuring means (605) and the pulse width information stored in the pulse width storing means (606), an operating means for computing the correction coefficient of the pulse width by the information from the pulse width storing means (606), and a steady state condition judging means (607) for judging whether or not the flow is in a steady state condition with the signal from the flow amount detecting means (3, 4), and outputs the controlling signal so that the comparing means (608) and the operating means may be operated in the steady state condition of the flow amount.

15. A flow amount measuring and controlling apparatus as defined in claim 13, wherein the correction coefficient computing means (602) comprises a storing means (610) for storing the length of each pulse of one period from the period detecting means (601), an adding means (609) for adding each length of one period from the period detecting means (601), dividing means (611) for computing the ratio of the addition value in the adding means (609) and the length of each pulse stored in the storing means (610).

**Patentansprüche**

1. Gerät zum Messen und Überwachen einer Durchflußmenge mit einem den Momentandurchfluß berechnenden Mittel (7) zum Berechnen der Fluid-Durchflußmenge pro Zeiteinheit;

einem Durchflußmengenänderungsdetektor (8) zum Erkennen und Ausgeben der Durchflußmengenänderung sowie der Zeit vom Beginn der Durchflußmengenänderung bis zu ihrer Beendigung auf der Basis der Zeitänderungscharakteristika des Momentandurchflußmengenwertes; einem Gerätecharakteristika aufzeichnenden Mittel (10) zum Speichern der Durchflußcharakteristika einer an dem Duchflußmeß-und -überwachungsgerät angeschlossenen Anzahl von Geräten; einem Bewertungsmittel (9), das auf der Basis der Durchflußmengenänderungsinformation vom Durchflußmengenänderungsdetektor (8) und der Durchflußcharakteristika der im Aufzeichnungsmittel gespeicherten Geräte bestimmt, welches der Geräte eine spezielle Änderung der Durchflußmenge verursacht hat; und einer Individual-Durchflußmengenüberwachungseinrichtung (12) zum individuellen Überwachen der von jedem Gerät verbrauchten Durchflußmenge auf der Basis des Signals vom die individuelle Durchflußmenge berechnenden Mittel (9).

2. Gerät zum Messen und Überwachen einer Durchflußmenge nach Anspruch 1, bei dem der Individual-Durchflußmengenregler (12) die Funktion hat, die Fluidversorgung abzuschalten, wenn ein bestimmtes Gerät über eine vorbestimmte Maximalzeit hinaus fortlaufend benutzt worden ist, wobei diese Maximalzeit für jedes Gerät getrennt eingestellt ist.

3. Gerät zum Messen und Überwachen einer Durchflußmenge nach Anspruch 1, bei dem die Individual-Durchflußmengenüberwachungseinrichtung (12) ein Display zur Anzeige des Integralwertes der verbrauchten Durchflußmenge von mindestens einem vorher festgelegten spezifischen Gerät aufweist.

4. Gerät zum Messen und Überwachen einer Durchflußmenge nach Anspruch 1, bei dem die Individual-Durchflußmengenüberwachungseinrichtung (12) ein Kommunikationsmittel aufweist, das über eine Telefonverbindung oder dergleichen die Durchflußmengen-Verbrauchsinformation von mindestens einem vorher festgelegten spezifischen Gerät nach außerhalb überträgt.

5. Gerät zum Messen und Überwachen einer Durchflußmenge nach Anspruch 1, bei dem der Durchflußmengenänderungsdetektor (8) einen Speicher (701) zum Speichern der Signale vom die Momentandurchflußmenge berechnenden Mittel (7) enthält sowie Änderungsgleichheit-Bewertungsmittel (703) enthält zum Erkennen und Ausgeben des zeitlichen Beginns und der zeitlichen Beendigung der Durchflußmengenänderung auf der Basis der im Speicher (701) gespeicherten früheren Momentandurchflußmengenänderung und der derzeitigen Momentandurchflußmenge vom die Momentandurchflußmenge berechnenden Mittel (7) mit Eingangsignal vom die Momentandurchflußmenge berechnenden Mittel (7) und dem Signal vom Speicher (701).

6. Gerät zum Messen und Überwachen einer Durchflußmenge nach Anspruch 5, bei dem das Änderungsgleichheit-Bewertungsmittel (703) entscheidet, ob eine Änderung für einen Zeitraum die gleiche ist, wenn die Differenz zwischen der zuletzt im Speicher gespeicherten Monmentandurchflußmenge und der derzeitigen Momentandurchflußmenge nicht größer ist als ein vorbestimmter Wert für bestimmte vorbestimmte Zeiten.

7. Gerät zum Messen und Überwachen einer Durchflußmenge nach Anspruch 5, bei dem das Änderungsgleichheits-Bewertungmittel (703) entscheidet, daß die Änderung für einen Zeitraum die gleiche ist, wenn die Differenz zwischen der zuletzt im Speicher (701) gespeicherten Momentandurchflußmenge und dem derzeitigen Momentandurchflußmengenwert nicht größer ist als ein vorbestimmter Wert während festgelegter vorbestimmter Zeiten, oder für einen Zeitraum, wenn die Differenz zwischen der zuletzt im Speicher (701) gespeicherten Momentandurchflußmenge und dem derzeitigen Momentandurchflußmengenwert ein bestimmter Wert oder größer ist und die Durchflußmengenänderung sich umkehrt.

8. Gerät zum Messen und Überwachen einer Durchflußmenge nach Anspruch 1, bei dem der Durchflußmengenänderungsdetektor (8) einen Speicher (701) enthält zum Speichern der Signale vom die Momentandurchflußmenge berechnenden Mittel (7); Änderungsgleichheits-Bewertungsmittel (703) zum Erkennen und Ausgeben des zeitlichen Beginns und der zeitlichen Beendigung der Durchflußmengenänderung auf der Basis des Vergleichs der Information über die im Speicher (701) gespeicherte frühere Momentandurchflußmengenänderung mit dem derzeitigen Momentandurchflußmengenwert vom die Momentandurchflußmenge berechnenden Mittel (7); sowie ein eine durchgehende Zeitspanne einer Durchflußmengenänderung messendes Mittel (704) zum Messen einer ununterbrochenen Zeitspanne mit vom Änderungsgleichheits-Bewertungsmittel (703) festgestellten gleichen Durchflußmengenänderungsserien.

9. Gerät zum Messen und Überwachen einer Durchflußmenge nach Anspruch 1, bei dem das die Gerätecharakteristika aufzeichnende Mittel (10) ein Mittel (101) zum Erkennen eines Nulldurchflusses enthält, das anhand des Eingangsignals vom Durchflußmengenänderungsdetektor (8) entscheidet, ob die Durchflußmenge gleich Null ist; ein Gattermittel (102) enthält, das, gesteuert durch das Mittel (101) zum Erkennen eines Nulldurchflusses, entscheidet, ob die Signale vom Durchflußmengenänderungsdetektor (8) an die nächste Stufe weiterzuleiten sind; einen Speicher (104) enthält, der mit dem Gatter (102) so verbunden ist, daß er den Durchflußmengenwert zum Zündzeitpunkt des Gerätes speichert, und ein vergleichendes Mittel (103) enthält, das das den Speicher (104) steuernde Signal ausgibt, so daß das Signal vom Gatter (102) im Speicher (104) gespeichert wird, wenn das Signal vom Gatter (102) bei einem Vergleich nicht mit dem Signal vom Speicher (104) übereinstimmt.

10. Gerät zum Messen und Überwachen einer Durchflußmenge nach Anspruch 1, bei dem das Individual-Durchflußmengenberechnungsmittel (9) einen Individual-Durchflußmengenspeicher (912) enthält zum Speichern des Durchflußmengenwertes jedes zum derzeitigen Zeitpunkt in Gebrauch befindlichen Gerätes; ein Wahrscheinlichkeits-Berechnungsmittel (909,910,911) zum Berechnen der Verbrauchswahrscheinlichkeit des Gerätes, bei dem eine Durchflußmengenänderung aufgetreten ist, anhand einer vorbestimmten Funktion unter Verwendung der Information über die Durchflußmengenänderung und der fortlaufenden Zeitspanne der Durchflußmengenänderung vom Durchflußmengenänderungsdetektor (8) sowie der Information der Durchflußmenge zum Zündzeitpunkt, der im die Gerätecharakteristika aufzeichnenden Mittel (10) gespeichert ist, und der Information über die Durchflußmenge während der Benutzung jedes Gerätes, die im Individual-Durchflußmengenspeichermittel (912) gespeichert ist; und einen Komparator (913) enthält, der die Wahrscheinlichkeit jedes von dem Wahrscheinlichkeits-Berechnungsmittel (909, 910, 911) berechneten Gerätes vergleicht und entscheidet, welches Gerät die maximale Wahrscheinlichkeit hatte, eine Durchflußmengenänderung zu verursachen.

11. Gerät zum Messen und Überwachen einer Durchflußmenge nach Anspruch 10, bei dem das Wahrscheinlichkeits-Berechnungsmittel (909, 910, 911) ein Rechenmittel (909) zum Berechnen derWahrscheinlichkeit einer Durchflußmengenzunahme oder -abnahme des in Benutzung befindlichen Gerätes enthält; ein Rechenmittel (910) zum Berechnen der Wahrscheinlichkeit der Zündung des nicht im Gebrauch befindlichen Gerätes und des Abschaltens des im Gebrauch befindlichen Gerätes enthält sowie ein Rechenmittel (911) enthält zum Berechnen der erforderlichen Korrektur des Durchflußmengenwertes jedes Gerätes während des Benutzungszeitraumes.

12. Gerät zum Messen und Überwachen einer Durchflußmenge nach Anspruch 1 mit einem Durchflußmengendetektor (3, 4), der so ausgelegt ist, daß er eine Mehrzahl von Signalen für eine Umdrehung von mechanischen, bewegbaren Abschnitten, die einem bestimmten konstanten Fluiddurchflußvolumen entsprechen, ausgibt; und mit einem Impulsintervall-Korrekturmittel (6) zum Korrigieren des Impulsintervalls, so daß das Impulssignal dann ausgegeben wird, wenn während einer Umdrehung des mechanischen, bewegbaren Abschnittes die Durchflußmenge gleich ist, wobei der Momentandurchflußmengenwert, der vom Rechenmittel (7) für die Momentandurchflußmenge gemessen wird, korrigiert wird.

13. Gerät zum Messen und Überwachen einer Durchflußmenge nach Anspruch 12, bei dem das Impulsintervall-Korrekturmittel (6) einen Periodendetektor (601) zum Erkennen des Referenzsignals der Periode einer Umdrehung des mechanischen, bewegbaren Abschnitts enthält; einen Impulszahldetektor (603) zum Zählen der Impulse aus dem Referenzsignal enthält, das vom Periodendetektor (601) erkannt wird, um die Anzahl der Ausgangsignale des Durchflußmengendetektors (3, 4) zu zählen; einen Korrekturkoeffizientenspeicher (604) enthält zum Speichern des Korrekturkoeffizienten zum Korrigieren des Durchflußmengenwertes, der dem Signal vom Durchflußmengendetektor (3, 4) entspricht, um den entsprechend dem Signal vom Impulszahldetektor (603) gespeicherten Korrekturkoeffizienten auszugeben; ein Korrekturkoeffizienten-Berechnungsmittel (602) enthält zum Berechnen des Korrekturkoeffizienten auf der Basis des Signals vom Periodendetektor (601) und zum Ausgeben an den Korrekturkoeffizientenspeicher (604).

14. Gerät zum Messen und Überwachen einer Durchflußmenge nach Anspruch 13, bei dem der Periodendetektor (601) ein Impulsbreiten-Meßmittel (605) enthält zum Messen der Impulsbreite aus dem Signal des Durchflußmengendetektors (3, 4); einen Impulsbreitenspeicher (606) enthält zum Speichern der Impulsbreite, die vom Impulsbreiten-Meßmittel (605) gemessen wurde; einen Komparator (608) enthält zum Vergleichen der Größe der Impulsbreite anhand der Impulsbreiteninformation vom Impulsbreiten-Meßmittel (605) und der im Impulsbreitenspeicher (606) gespeicherten Impulsbreiteninformation; ein Betriebsmittel zum Berechnen des Korrekturkoeffizienten für die Impulsbreite anhand der Information aus dem Impulsbreitenspeicher (606), und ein Dauerzustand-Entscheidungsmittel (607) zum Entscheiden auf der Basis des Signals vom Durchflußmengendetektor (3, 4), ob der Durchfluß sich im stabilen Zustand befindet oder nicht, welches Mittel das Regelsignal so ausgibt, daß der Komparator (608) und das Betriebsmittel hinsichtlich der Durchflußmenge im stabilen Zustand betätigt werden.

**15.** Gerät zum Messen und Überwachen einer Durchflußmenge nach Anspruch 13, bei dem das Korrekturkoeffizienten-Berechnungsmittel (602) einen Speicher (610) enthält zum Speichern der Länge jedes Impulses einer Periode des Periodendetektors (601); Addiermittel (609) enthält zum Addieren jeder Länge einer Periode aus dem Periodendetektor (601), Divisionsmittel (611) enthält zum Berechnen des Verhältnisses des Additionswertes in den Addiermitteln (609) zur Länge jedes im Speicher (610) gespeicherten Impulses.

**Revendications**

**1.** Dispositif de mesure et de commande de débit comprenant un moyen de calcul de débit momentané (7) destiné à calculer le débit par unité de temps de fluide, un moyen de détection de variation de débit (8) destiné à détecter et à fournir en sortie la variation de débit et le temps depuis le début de la variation de débit jusqu'à l'achèvement de celle-ci grâce aux caractéristiques de variation dans le temps de la valeur de débit momentané, un moyen d'enregistrement de caractéristiques d'appareil (10) destiné à mémoriser les caractéristiques de débit d'un certain nombre d'appareils reliés audit dispositif de mesure et de commande de débit, un moyen d'estimation (9) destiné à déterminer lequel des appareils a provoqué une variation particulière du débit grâce à l'utilisation d'informations de variation de débit provenant du moyen de détection de variation de débit (8) et des caractéristiques de débit des appareils mémorisées dans le moyen d'enregistrement (10), et un moyen de commande de débit individuel (12) destiné à commander le débit utilisé de chaque appareil séparément grâce au signal provenant du moyen d'estimation de débit individuel (9).

**2.** Moyen de mesure et de commande de débit selon la revendication 1, dans lequel le moyen de commande de débit individuel (12) comporte une fonction consistant à couper la fourniture du fluide lorsqu'un certain appareil a été utilisé au-delà d'une durée maximum prédéterminée pendant laquelle il peut être utilisé en continu, et ladite durée maximum est établie pour chaque appareil séparément.

**3.** Moyen de mesure et de commande de débit selon la revendication 1, dans lequel le moyen de commande de débit individuel (12) comporte un moyen d'affichage conçu pour afficher la valeur d'intégration du débit utilisé d'au moins un appareil particulier déterminé au préalable.

**4.** Moyen de mesure et de commande de débit selon la revendication 1, dans lequel le moyen de commande de débit individuel (12) comporte un moyen de communication prévu pour transmettre à l'extérieur par l'intermédiaire d'un circuit téléphonique et analogue les informations de débit utilisé d'au moins un appareil particulier déterminé au préalable.

**5.** Moyen de mesure et de commande de débit selon la revendication 1, dans lequel le moyen de détection de variation de débit (8) comprend un moyen de stockage en mémoire (701) destiné à mémoriser les signaux provenant du moyen de calcul de débit momentané (7), et un moyen d'évaluation de variation identique (703) destiné à détecter, fournissant en sortie l'instant de début et l'instant d'achèvement de la variation du débit en utilisant la variation de débit momentané passé mémorisée dans le moyen de stockage en mémoire (701) et le débit momentané actuel provenant du moyen de calcul de débit momentané (7) en utilisant le signal appliqué en entrée provenant du moyen de calcul de débit momentané (7) et le signal provenant du moyen de stockage en mémoire (701).

**6.** Moyen de mesure et de commande de débit selon la revendication 5, dans lequel le moyen d'évaluation de variation identique (703) est conçu pour évaluer que la variation est la même jusqu'à un instant où la différence entre le dernier débit momentané mémorisé dans le moyen de mémorisation (701) et la valeur du débit momentané actuelle est déterminée ne pas être supérieure à une valeur prédéterminée pendant un certain nombre prédéterminé de fois.

**7.** Moyen de mesure et de commande de débit selon la revendication 5, dans lequel le moyen d'évaluation de variation identique (703) est conçu pour évaluer que la variation est la même jusqu'à un instant où la différence entre le dernier débit momentané mémorisé dans le moyen de mémorisation (701) et la valeur du débit momentané actuelle est déterminée ne pas être supérieure à une valeur prédéterminée pendant un certain nombre prédéterminé de fois, ou bien jusqu'à un instant où la différence entre le dernier débit momentané mémorisé dans le moyen de mémorisation (701) et la valeur du débit momentané actuelle est détectée à une certaine valeur ou davantage, et l'inclinaison de la variation de débit s'inverse.

**8.** Moyen de mesure et de commande de débit selon la revendication 1, dans lequel le moyen de détection de variation de débit (8) comprend un moyen de stockage en mémoire (701) destiné à mémoriser les signaux provenant du moyen de calcul de débit momentané (7), un moyen d'évaluation de variation identique (703) destiné à détecter et fournir en sortie l'instant de début et l'instant d'achèvement de la variation de débit en comparant les informations de la variation de débit momentané passée mémorisée dans le moyen de stockage en mémoire (701) et la valeur de débit momentané actuelle provenant du moyen de calcul de débit momentané (7), ainsi qu'un moyen de mesure de durée continue de variation de débit (704) destiné à mesurer un intervalle de temps continu d'une même série de variation de débit détectée par le moyen d'évaluation de variation identique (703).

9. Moyen de mesure et de commande de débit selon la revendication 1, dans lequel le moyen d'enregistrement de caractéristiques d'appareil (10) comprend un moyen d'évaluation de débit nul (101) destiné à évaluer si le débit est nul grâce au signal appliqué en entrée à partir du moyen de détection de variation de débit (8), un moyen de porte (102) destiné à décider si oui ou non les signaux provenant du moyen de détection de variation de débit (8) doivent être transmis à l'étage suivant grâce à la commande du moyen d'évaluation de débit nul (101), un moyen de stockage en mémoire (104) relié au moyen de porte (102) afin de mémoriser la valeur de débit à l'instant de l'allumage de l'appareil, et un moyen de comparaison (103) destiné à fournir en sortie un signal afin de commander le moyen de stockage en mémoire (104) de façon que le signal provenant du moyen de porte (102) puisse être mémorisé dans le moyen de stockage en mémoire (104) si le signal provenant du moyen de porte (102) n'est pas en accord avec le signal provenant du moyen de stockage en mémoire (104) grâce à une comparaison entre les signaux.

10. Moyen de mesure et de commande de débit selon la revendication 1, dans lequel le moyen d'estimation de débit individuel (9) comprend un moyen de mémorisation de débit individuel (912) destiné à mémoriser la valeur de débit de chaque appareil en utilisation à l' instant actuel, un moyen de calcul de probabilité (909, 910, 911) destiné à calculer la probabilité de l'appareil qui a provoqué la variation de débit grâce à une fonction prédéterminée en utilisant les informations de variation de débit et les informations de durée continue de la variation de débit provenant du moyen de détection de variation de débit (8), ainsi que les informations de variation de débit à l'instant de l'allumage mémorisées dans le moyen d'enregistrement de caractéristiques d'appareil (10), et les informations du débit pendant l'utilisation de chaque appareil mémorisées dans le moyen de mémorisation de débit individuel (912), ainsi qu'un moyen de comparaison (913) qui compare les probabilités de chaque appareil calculées par le moyen de calcul de probabilité (909, 910, 911) et évalue l'appareil présentant la probabilité maximum comme ayant provoqué la variation de débit.

11. Moyen de mesure et de commande de débit selon la revendication 10, dans lequel le moyen de calcul de probabilité (909, 910, 911) comprend un moyen de calcul (909) destiné à calculer la probabilité de l'augmentation/diminution de débit de l'appareil en utilisation, un moyen de calcul (910) destiné à calculer la probabilité de l'allumage de l'appareil non en utilisation et de l'extinction de l'appareil en utilisation, et un moyen de calcul (911) destiné à calculer la nécessité de corriger la valeur de débit de chaque appareil pendant l'utilisation.

12. Moyen de mesure et de commande de débit selon la revendication 1, comprenant un moyen de détection de débit (3, 4) conçu pour fournir en sortie une pluralité de signaux pendant une rotation ou un tour complet de la partie mobile de type mécanique qui correspond à un certain volume constant de débit de fluide, et un moyen de correction d'intervalle d'impulsions (6) destiné à corriger l'intervalle d'impulsions de façon que le signal d'impulsion apparaisse pour chaque débit égal pendant une rotation ou un tour complet de la partie mobile de type mécanique, où la valeur de débit momentané comptée par le moyen de calcul de débit momentané (7) est corrigée.

13. Dispositif de mesure et de commande de débit selon la revendication 12, dans lequel le moyen de correction d'intervalle d'impulsions (6) comprend un moyen de détection de période (601) destiné à détecter le signal de référence de la période d'une rotation ou d'un tour complet de la partie mobile de type mécanique, un moyen de détection de nombre d'impulsions (603) destiné à compter le nombre d'impulsions depuis le signal de référence détecté par le moyen de détection de période (601) afin de compter le nombre des signaux fournis en sortie du moyen de détection de débit (3, 4), un moyen de mémorisation de coefficients de correction (604) destiné à mémoriser le coefficient de correction destiné à corriger la valeur de débit correspondant au signal provenant du moyen de détection de débit (3, 4) de manière à fournir en sortie le coefficient de correction mémorisé conformément au signal provenant du moyen de détection de nombre d'impulsions (603), un moyen de calcul de coefficient de correction (602) destiné à calculer les coefficients de correction grâce au signal provenant du moyen de détection de période (601) de manière à les fournir en sortie au moyen de mémorisation de coefficients de correction (604).

14. Dispositif de mesure et de commande de débit selon la revendication 13, dans lequel le moyen de détection de période (601) comprend un moyen de mesure de largeur d'impulsion (605) destiné à mesurer la largeur d'impulsion à partir du signal du moyen de détection de débit (3, 4), un moyen de mémorisation de largeur d'impulsion (606) destiné à mémoriser la largueur d'impulsion mesurée par le moyen de mesure de largeur d'impulsion (605), un moyen de comparaison (608) destiné à comparer la grandeur de la largeur d'impulsion aux informations de largeur d'impulsion provenant du moyen de mesure de largeur d'impulsion (605) et aux informations de largeur d'impulsion mémorisées dans le moyen de mémorisation de largeur d'impulsion (606), un moyen de mise en oeuvre destiné à calculer le coefficient de correction de la largeur d'impulsion grâce aux informations provenant du moyen de mémorisation de largeur d'impulsion (606), et un moyen d'évaluation de condition d'état stable (607) destiné à évaluer si oui ou non le débit est dans une condition d'état stable en utilisant le signal provenant du moyen de détection de débit (3, 4), et fournissant en sortie le signal de commande de façon que le moyen de comparaison (608) et le moyen de mise en oeuvre puissent être mis en oeuvre dans la condition d'état stable du débit.

15. Dispositif de mesure et de commande de débit selon la revendication 13, dans lequel le moyen de calcul de coefficient de correction (602) comprend un moyen de mémorisation (610) destiné à mémoriser la longueur de chaque impulsion d'une période provenant du moyen de détection de période (601), un moyen d'addition (609) destiné à additionner chaque longueur d'une période provenant du moyen de détection de période (601), un moyen de division (611) destiné à calculer le rapport de la valeur d'addition dans le moyen d'addition (609) et de la longueur de chaque impulsion mémorisée dans le moyen de mémorisation (610).

*Fig.1*

```
┌──────────────────────┐
│   integrating means  │  5
└──────────────────────┘

┌──────────────────────┐
│   pulse interval     │  6
│   correction means   │
└──────────────────────┘

┌──────────────────────┐
│  momentary flow      │  7
│  amount computing    │
│  means               │
└──────────────────────┘

┌──────────────────────┐      ┌──────────────────────┐
│  flow amount         │  8   │  appliance           │  10
│  change detecting    │      │  characteristic      │
│  means               │      │  registering means   │
└──────────────────────┘      └──────────────────────┘

┌──────────────────────┐
│  individual flow     │  9
│  amount estimating   │
│  means               │
└──────────────────────┘

┌──────────────────────┐
│  safety control      │  11
│  means               │
└──────────────────────┘

┌──────────────────────┐
│  individual flow     │  12
│  amount              │
│  controlling means   │
└──────────────────────┘
```

comparator  4

## Fig.2

## Fig.3

## Fig.4

# Fig.5

701

```
memory storing
    means
```

703

```
gas flow change        same change
judging means          judging means
```

702

```
flow amount
change
continous time    ──────▶  output
measuring means
```

704

*Fig.6*

$\Delta Q_{total}$

$\Delta Q$

$\Delta Q_x$

$Q_{i-3}$    $Q_{i-2}$    $Q_{i-1}$    $Q_i$    $Q_{i+m}$

*Fig.7*

705

```
is there signal from
gas flow change
judging means 702?
```

——— NO ———

YES

706

$\Delta Q$ and $\Delta Q_x$:identical code discrimination

——— NO ———

YES

707

$\Delta Q_x \leftarrow \Delta Q_x + \Delta Q$

709

708

$\Delta Q_x \leftarrow \Delta Q$ ← $\Delta Q_{total} \leftarrow \Delta Q_x$

710

——— YES ——— $\Delta Q_x = 0$?

NO

711 712

$\Delta Q_x \leftarrow 0$ ← $\Delta Q_{total} \leftarrow \Delta Q_x$

## Fig.8

| | |
|---|---|
| 901 | Calculation of possibility of gas appliance which made gas flow change of increase or decrease. An: possibility of No. n appliance |
| 902 | Calculation of possibility of gas appliance which is ignited or extinguished Bn: possibility of No. n appliance |
| 903 | $\Delta T$ gentle? |

YES      NO

| 904 | $K1 \leftarrow 1, K2 \leftarrow x$ |
|---|---|
| 905 | $K1 \leftarrow x, K2 \leftarrow 1$ |

| 906 | $An' \leftarrow K1 \times An, Bn' \leftarrow K2 \times Bn$ |
|---|---|

| 907 | extracting maximum value from $An'$, $Bn'$ data |
|---|---|

| 908 | assuming of gas appliance which made gas flow change |
|---|---|

# Fig.9

possibility computing means
of gas appliance which made
gas flow change of increase
or decrease

909

possibility computing means
of gas appliance which is
ignited or extinguished

910

possibility correcting means

911

comparing
means

913

→ output E

individual flow amount memory
storing means

912

EP 0 507 101 B1

# Fig.10

(1)

(2)

(3)

## Fig.11

```
                        101

                ┌──────────────────┐
                │ flow amount      │
input A ───────▶│ zero judging     │
                │ means            │
                └──────────────────┘
                         │
                         ▼                          103
input B ───────▶┌──────────────────┐        ┌──────────────────┐
                │   gate means     │──●────▶│   comparing      │◀──┐
                └──────────────────┘   │    │     means        │   │
                         │             │    └──────────────────┘   │
                        102            │             │             │
                                       │             ▼             │
                                       │    ┌──────────────────┐   │
                                       └───▶│ memory storing   │───┘
                                            │     means        │
                                            └──────────────────┘
                                                     │        104
                                                     ▼
                                                 output F
```